# EUROPEAN PATENT APPLICATION

(11) **EP 4 373 151 A1**
(43) Date of publication of application: **22.05.2024**
(21) Application number: 21949587.6
(22) Date of filing: 12.07.2021
(51) Int. Cl.: H04W 24/08, H04W 28/16, H04L 12/14, H04M 15/00, H04W 4/24

(54) **POLICY PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: HONG, Wei, Beijing 100085 (CN); CHEN, Dong, Beijing 100085 (CN)
(74) Representative: Gunzelmann, Rainer
(86) International application number: PCT/CN2021/105854
(87) International publication number: WO 2023/283791

(57) **Abstract**

The present invention provides a policy processing method and apparatus, a communication device, and a storage medium. The policy processing method executed by a first network element can comprise: determining policies for UEs in a UE group, as well as execution conditions of the policies (S110), wherein when the conditions of a subsequent UE and/or a network state satisfy a corresponding execution condition, the corresponding policy takes effect and is executed.

## Description

### FIELD

The present invention relates to the technical field of wireless communication but is not limited to the technical field of wireless communication, and in particular relates to a method and apparatus for processing a policy, a communication device, and a storage medium.

### BACKGROUND

Multi-modality technology is used to fuse and process multi-modality information in order to obtain a good interactive experience or to improve the machine learning capabilities of a machine learning model.

Each specific type of information or information storing representations can be called a modality. For example, multi-modality includes human senses of touch, hearing, vision, and smell; multimedia data describing the same object; and media of the same type of data information from different sensors. In a broad sense, different languages can also be regarded as different modalities, and even data sets collected under different circumstances can also be regarded as different modalities.

A multi-modality interactive system involves multi-modality inputs and/or outputs. The information collected by devices is for the same service, and these devices serve as multi-modality input devices, and may form a multi-modality input device group.

For another example, an application of virtual reality (VR) or augment reality (VR) may involve multi-modality outputs, specifically may involve devices that output images, devices that output audio, etc. These devices serve as multi-modality output devices and may form a device group.

### SUMMARY

A method and apparatus for processing a policy, a method and apparatus for processing information, a communication device, and a storage medium are provided in the present invention.

According to a first aspect of embodiments of the present invention, there is provided a method for processing a policy, performed by a first network element, including: determining a policy for a user equipment (UE) in a UE group and an execution condition of the policy.

According to a second aspect of embodiments of the present invention, there is provided a method for processing a policy, performed by a second network element, including: receiving a group policy for a UE group and an execution condition of the group policy; and generating a group quality of service (QoS) profile and/or a group packet detective rule (PDR) for the UE group according to the group policy and the execution condition of the group policy. The group QoS profile and/or the group PDR are configured to allow the group policy to be executed in response to determining that the execution condition of the group policy is satisfied.

According to a third aspect of embodiments of the present invention, there is provided a method for processing a policy, including: receiving a group QoS profile for a UE group, in which the group QoS profile is generated according to a group policy for the UE group and an execution condition of the group policy; and executing the group QoS profile.

According to a fourth aspect of embodiments of the present invention, there is provided a method for processing a policy, including: receiving a group PDR for a UE group, in which the group PDR is generated according to a group policy for the UE group and an execution condition of the group policy; and executing the group PDR.

According to a fifth aspect of embodiments of the present invention, there is provided an apparatus for processing a policy, including: a first determining module configured to determine a policy for a UE in a UE group and an execution condition of the policy.

According to a sixth aspect of embodiments of the present invention, there is provided an apparatus for processing a policy, including: a third receiving module configured to receive a group policy for a UE group and an execution condition of the group policy; a generating module configured to generate a group QoS profile and/or a group PDR for the UE group according to the group policy and the execution condition of the group policy. The group QoS profile and/or the group PDR are configured to allow the group policy to be executed in response to determining that the execution condition of the group policy is satisfied.

According to a seventh aspect of embodiments of the present invention, there is provided an apparatus for processing a policy, including: a fourth receiving module configured to receive a group QoS profile for a UE group, in which the group QoS profile is generated according to a group policy for the UE group and an execution condition of the group policy; and a first executing module configured to execute the group QoS profile.

According to an eighth aspect of embodiments of the present invention, there is provided an apparatus for processing a policy, including: a fifth receiving module configured to receive a group PDR for a UE group, in which the group PDR is generated according to a group policy for the UE group and an execution condition of the group policy; and a second executing module configured to execute the group PDR.

According to a ninth aspect of embodiments of the present invention, there is provided a communication device, including: a processor, a transceiver, a memory and an executable program stored in the memory and executable by the processor. The processor is configured to execute the executable program to perform the method for processing the policy as described in any one of the first aspect to the fourth aspect.

According to a tenth aspect of embodiments of the present invention, there is provided a computer storage medium for storing an executable program that, after executed by a processor, implements the method for processing the policy as described in any one of the first aspect to the fourth aspect.

In the technical solutions provided by the embodiments of the present invention, while determining the policy, the execution condition of the policy is also determined. Later, when the UE state and/or network state meet the execution condition, the policy corresponding to the execution condition will be enforced. Compared with determination of the policy based on frequent interactions of the UE and/or the network between the application server (AS) and the communication network, the present embodiments, on the one hand, improve the timeliness for modifying the executed policy, and on the other hand, reduce the information exchange between the AS and the communication network, and reducing the signaling overhead.

It should be understood that both the foregoing general description and the following detailed description are explanatory only, and are not intended to limit the embodiments of the present invention.

### BRIEF DESCRIPTION OF THE DRAWINGS

The accompanying drawings, which are incorporated in and constitute a part of this specification, illustrate embodiments consistent with the present invention and together with the description serve to explain the principles of the embodiments of the present invention.
FIG. 1 is a structure schematic diagram of a wireless communication system according to an embodiment.
FIG. 2 is a flow chart of a method for processing a policy according to an embodiment.
FIG. 3 is a flow chart of a method for processing a policy according to an embodiment.
FIG. 4 is a flow chart of a method for processing a policy according to an embodiment.
FIG. 5 is a flow chart of a method for processing a policy according to an embodiment.
FIG. 6 is a flow chart of a method for processing a policy according to an embodiment.
FIG. 7 is a flow chart of a method for processing a policy according to an embodiment.
FIG. 8 is a flow chart of a method for processing a policy according to an embodiment.
FIG. 9 is a flow chart of a method for processing a policy according to an embodiment.
FIG. 10 is a structure schematic diagram of an apparatus for processing a policy according to an embodiment.
FIG. 11 is a structure schematic diagram of an apparatus for processing a policy according to an embodiment.
FIG. 12 is a structure schematic diagram of an apparatus for processing a policy according to an embodiment.
FIG. 13 is a structure schematic diagram of an apparatus for processing a policy according to an embodiment.
FIG. 14 is a structure schematic diagram of a network element according to an embodiment.

### DETAILED DESCRIPTION

Reference will now be made in detail to the embodiments, examples of which are illustrated in the accompanying drawings. When the following description refers to the accompanying drawings, the same numerals in different drawings refer to the same or similar elements unless otherwise indicated. The implementations described in the following embodiments do not represent all implementations consistent with the embodiments of the present invention. Rather, they are merely examples of apparatuses and methods consistent with the aspects of the disclosed embodiments as recited in the appended claims.

Terms used in the embodiments of the present invention are only for the purpose of describing specific embodiments, and shall not be construed to limit the present invention. As used in the embodiments of the present invention and the appended claims, "a/an" and "the" in a singular form are intended to include plural forms, unless clearly indicated in the context otherwise. It should be understood that, the term "and/or" used herein represents and contains any one of associated listed items and all possible combinations of more than one associated listed items.

It should be understood that terms such as "first," "second" and "third" may be used in the embodiments of the present invention for describing various information, these information should not be limited by these terms. These terms are only used for distinguishing information of the same type from others. For example, first information may also be referred to as second information, and similarly, the second information may also be referred to as the first information, without departing from the scope of the embodiments of the present invention. As used herein, the term "if' may be construed to mean "when" or "upon" or "in response to determining" depending on the context.

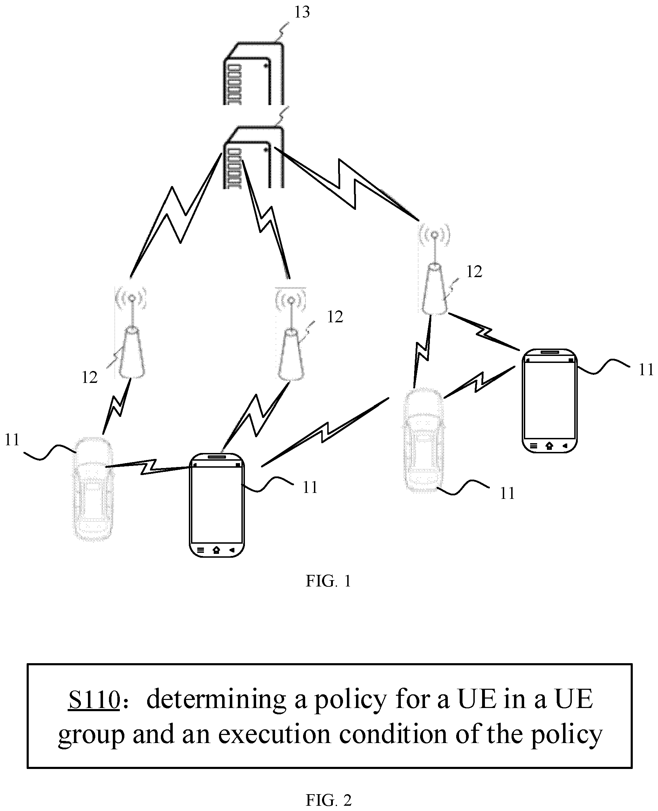

With reference to FIG. 1, which shows a structure schematic diagram of a wireless communication system provided in embodiments of the present invention. As shown in FIG. 1, the wireless communication system is a communication system based on the cellular mobile communication technology, and the wireless communication system may include: several UEs 11 and several access devices 12.

A UE 11 may be a device that provides voice and/or data connectivity to a user. The UE 11 can communicate with one or more core networks via a radio access network (RAN), and the UE 11 may be an Internet of Things (IoT) UE, such as a sensor device, a mobile phone (or called a "cellular" phone) and a computer including an IoT UE. For example, the UE 11 may be a fixed device, a portable device, a pocket device, a hand-held device, a computer built-in device or a vehicle-mounted device. For example, the UE 11 may be a station (STA), a subscriber unit, a subscriber station, a mobile station, a mobile, a remote station, an access point, a remote UE, an access UE, a user terminal, a user agent, a user device, or a user equipment. Alternatively, the UE 11 may also be a device of an unmanned aerial vehicle. Alternatively, the UE 11 may also be a vehicle-mounted device, for example, it may be a trip computer with a wireless communication function, or a wireless communication device connected externally to the trip computer. Alternatively, the UE 11 may also be a roadside device, for example, it may be a street lamp, a signal lamp, or other roadside devices with a wireless communication function.

The access device 12 may be a network device in the wireless communication system. The wireless communication system may be the 4th generation (4G) mobile communication system, also known as a long term evolution (LTE) system, or the wireless communication system may be a 5G system, also called a new radio (NR) system or 5G NR system. Alternatively, the wireless communication system may be a next-generation system of the 5G system. An access network in the 5G system is called new generation-radio access network (NG-RAN). Alternatively, it may be a machine type communication (MTC) system.

The access device 12 may be an evolved node B (eNB) in a 4G system. Alternatively, the access device 12 may be a next-generation node B (gNB) adopting a centralized and distributed architecture in the 5G system. When the access device 12 adopts the centralized and distributed architecture, it generally includes a central unit (CU) and at least two distributed units (DU). The centralized unit is provided with a protocol stack of a packet data convergence protocol (PDCP) layer, a radio link control (RLC) layer, a media access control (MAC) layer. The distributed unit is provided with a physical (PHY) layer protocol stack. The specific implementation of the access device 12 is not limited in the embodiments of the present invention.

A wireless connection can be established between the access device 12 and the UE 11 through a wireless radio interface. In different embodiments, the wireless radio interface is a wireless radio interface based on the fourth generation (4G) mobile communication network technology standard; or the wireless radio interface is a wireless radio interface based on the fifth generation (5G) mobile communication network technology standard, such as a new radio interface; or the wireless radio interface is a wireless radio interface based on a next-generation (from 5G) mobile communication network technology standard.

In some embodiments, an end-to-end (E2E) connection is established between the UEs 11, for example, vehicle to everything (V2X) communication, such as vehicle to vehicle (V2V) communication, vehicle to infrastructure (V2I) communication and vehicle to pedestrian (V2P) communication.

In some embodiments, the above wireless communication system may further include a network management device 13.

Several access devices 12 are respectively connected to the network management device 13. The network management device 13 may be a core network device in the wireless communication system, for example, the network management device 13 may be a mobility management entity (MME) in an evolved packet core (EPC) network. Alternatively, the network management device may be other core network devices, such as a serving gateway (SGW), a public data network gateway (PGW), a policy and charging rule function (PCRF) unit or a home subscriber server (HSS), etc. The implementation form of the network management device 13 is not limited in the embodiments of the present invention.

As shown in FIG. 2, there is provided a method for processing a policy, performed by a first network element, including the following step.

In block S 110, a policy for a UE in a UE group and an execution condition of the policy are determined.

The first network element is a network element of the core network. For example, the first network element includes, but is not limited to, a policy control function (PCF).

In the embodiment of the present invention, the policy determined by the first network element is a policy for the UE group. After the policy/policies of the UE group is/are determined, the execution condition(s) for executing every policy is determined. In this way, the policy will be executed/enforced only when its corresponding execution condition is satisfied.

In an example, a plurality of policies for the UE group are determined and the execution condition of each policy is determined. Subsequently, in a case where this UE group is going to execute policies, according to execution conditions that have been satisfied in the current situation, policy/policies corresponding to the satisfied execution conditions is/are executed.

For example, N policies and execution conditions of the N policies are generated for the UE group, where N is any positive integer. If a state of the UE group and/or a network state meet an execution condition corresponding to the n^{th} policy, the n^{th} policy is executed, where n is any positive integer less than or equal to N.

The UE group may be a UE group formed based on any manner. Generally, a UE group may include at least one UE.

The UE group includes, but is not limited to, a UE group composed of at least one multi-modality input device, and/or a UE group composed of at least one multi-modality output device.

In embodiments of the present invention, when generating at least one policy for the UE group, the at least one policy and the execution condition(s) of the at least one policy may be set at one time. If a plurality of policies are involved, the plurality of policies and the execution conditions of the plurality of policies will be determined at one time. Further, fluctuations in a network state and/or a UE state may lead to different policies to be adapted, and in this case, the policy that meets a current execution condition is selected according to the network state and/or the UE state without requiring an application server (AS) to frequently send information such as policy information or an instruction to switch policies to the first network element, thereby reducing frequent interactions caused by dynamic changes in policies.

**Table 1**

| | Information | | | | Execution condition |
|---|---|---|---|---|---|
| | UE1 | UE2 | ... | UEn | |
| Policy 1 | P11 | P12 | ... | P1n | C1 |
| Policy 2 | P21 | P22 | ... | P2n | C2 |
| ... | ... | ... | ... | ... | ... |
| Policy m | Pm1 | Pm2 | ... | Pmn | Cm |

Table 1 shows an example of a relationship between a policy and an execution condition for the UE group, and specific implementations are not limited to this example.

Table 1 refers to a UE group including UE1 to UEn, where n is any positive integer. One policy may include at least one policy items. Table 1 shows m policies, from Policy 1 to Policy m. For example, Policy 1 includes: policy item P11 for UE1, policy item P12 for UE2, ... , and policy item P1n for UEn. For another example, Policy m includes: policy item Pm1 for UE1, policy item Pm2 for UE2, ... , and policy item Pmn for UEn. The aforementioned policy item (for example, Pmn) may be regarded as a policy per UE, that is, a policy at UE granularity. Policy m is a policy for the entire UE group. C1 represents an execution condition of Policy 1, C2 represents an execution condition of Policy 2, C3 represents an execution condition of Policy 3, ... , and Cm represents an execution condition of Policy m. If the state of the UE and/or the state of the network conform to an execution condition Cx, Policy x will be executed for the UE group, where x is any positive integer between 1 and m.

In some embodiments, the policy includes: a policy control and charging (PCC) policy, and/or a packet data unit (PDU) session policy.

The PCC policy is used to map quality of service (QoS) requirements of application-level session service data flow into an IP connectivity access network (IP-CAN) architecture, to access the QoS requirements of a transport network bearer-level service to ensure data transmission. Further, according to the charging policy of the operator, a charging function at a service data flow level can be realized.

The QoS of the PDU session can be controlled by the PDU.

In some embodiments, different policies for the same UE group are configured with different execution conditions. In this way, for a UE group, if the satisfied execution condition changes, the first network element will automatically change the policy for the UE group. There is no need to require an AS reconfiguration, and thus the present method has the characteristics of small policy switching delay and small signaling overhead.

It should be noted that each element in the above Table 1 can be executed alone or in combination with other elements, and whether it is executed alone or in combination may be determined according to specific communication requirements.

In some embodiments, a trigger event corresponding to the execution condition occurs, and the policy for execution is switched.

That is, when the trigger event that meets execution condition switching occurs, the policy for execution will be changed.

For example, the execution condition includes a QoS threshold, and the trigger event includes one of a QoS of at least one UE in the UE group exceeding the QoS threshold; and a QoS of at least one UE in the UE group being less than the QoS threshold.

If a QoS of a UE is switched from not exceeding the QoS threshold to exceeding the QoS, and/or a QoS of at least one UE above the QoS threshold drops to less than the QoS threshold, the execution condition for switching is satisfied.

For example, a configured bandwidth of a data flow is determined, and an actual bandwidth of the data flow is detected. If the actual bandwidth currently detected is smaller than the configured bandwidth, it indicates that the QoS of at least one UE may be decreased below the QoS threshold. For another example, a configured rate of a data flow is determined, and an actual rate of the data flow is detected. If the actual rate is less than the configured rate, a current QoS of the UE may be decreased below the QoS threshold.

If a QoS of at least one UE in the UE group does not reach a minimum QoS threshold, it is determined that QoS guarantee is unsuccessful; if a QoS of any UE in the UE group reaches the minimum QoS threshold, it is determined that the QoS guarantee of the whole UE is successful. Therefore, in some embodiments, the trigger event further includes: QoS guarantee of at least one UE in the UE group being switched from successful to unsuccessful, and switching a case where QoS guarantee of a UE in the UE group is unsuccessful to another case where QoS guarantee for all UEs is successful.

In some embodiments, the execution condition may be the QoS threshold, and different policies may correspond to different QoS thresholds.

Therefore, the policy being currently effective can be determined according to the threshold corresponding to the QoS of the UE.

In some embodiments, the execution condition includes priority information; and the trigger event includes at least one of: resource allocation for a UE with a priority indicated by the priority information being unsuccessful; QoS guarantee for a UE with a priority indicated by the priority information being unsuccessful; resource allocation for a UE with a priority indicated by the priority information being successful; or QoS guarantee for a UE with a priority indicated by the priority information being successful.

The priority indicated by the priority information is usually a high priority or a mandatory priority.

In this way, the execution of the policy for the UE group will be affected by whether the QoS guarantee or the resource allocation for the UE with the high priority or mandatory priority in the UE group succeeds or fails. A significance of the resource allocation result(s) and QoS guarantee result(s) for low-priority UE(s) can be ignored or lowered. For example, the priority of the UE group includes a first priority and a second priority. In a case where the first priority is higher than the second priority, the priority indicated by the priority information included in the execution condition is the first priority.

During establishment of data flows, resources need to be allocated. If the resource allocation for the UE with the high priority or mandatory priority is unsuccessful, a core or important part of the service corresponding to the data flows will not be completed, and from this, it can be known that the resource allocation result for the UE with the high priority or mandatory priority matters. After the data flow is established, there may be network fluctuations during the transmission of the data flow, which will cause fluctuations in the QoS of the UE. If the QoS of the UE with the high priority or mandatory priority decreases too quickly or even makes the QoS guarantee fail, the QoS corresponding to the data flow will be poor. In view of this, it needs to adjust effective policy in time to reduce waste of resources and improve the service quality.

Since high-priority or mandatory-priority UEs are more important to the service of the entire UE group, if the trigger event corresponding to high-priority or mandatory-priority QoS or resource occurs, it will affect the service of the entire UE group (whether to be guaranteed or not). In order to simplify state monitoring of the UEs, only states of high-priority and/or mandatory-priority UEs can be monitored to determine whether the trigger event occurs.

For example, if the resource allocation of the UE with the priority indicated by the priority information fails, Policy 1 takes effect. According to Policy 1, resources allocated to the entire UE group are released, thereby reducing waste of resources. If the UE group still needs the corresponding service, resources can be reallocated and data flows can be established.

For another example, if the resource allocation of the UE with the priority indicated by the priority information succeeds, Policy 2 takes effect. Subsequently, resources are allocated to other UEs to establish corresponding data flows according to Policy 2, to ensure timely response to the service of the UE group.

The trigger events described above are only examples, and specific implementations are not limited to the above examples.

In an embodiment of the present invention, the method for processing the policy, performed by the first network element, further includes: determining the policy and the execution condition of the policy according to policy information and condition information for the UE in the UE group provided by the AS.

For example, the AS that provides business services interacts with the first network element on the network side through a network exposure function (NEF), thereby providing the policy information and the condition information to the first network element such as the PCF.

The policy information may be any information used by the first network element to determine the policy, for example, the policy information may indicate specific content of the policy. The condition information may be any information indicating policy execution or effectiveness.

There are many kinds of UE groups. Some UE groups require joint coordination of policies among UEs, while some UE groups do not require joint coordination of policies among UEs. The method for processing the policy provided in the embodiments of the present invention may be applied to the UE group in which the policy coordination is required for UEs. Whether the policy of the UE group needs joint coordination or not can be determined according to whether the services provided in the UE group are related/dependent or not.

In some embodiments, the UE group includes a UE group that needs policy coordination. For UEs that do not need policy joint coordination, the aforementioned method for processing the policy, i.e. determining the policy and meanwhile determining the execution condition of the policy, is not needed. That is, for a UE that does not need policy joint coordination, it is fine to determine the policy without determining the execution condition of the policy.

For example, policies of some UEs in a UE group need to be coordinated, and policies of some UEs do not need to be coordinated. For another example, policies of all UEs in a UE group need to be coordinated.

For still another example, policies of any two UEs within a UE group are independent of each other, and no coordination is required.

The policy method provided in the embodiments of the present invention is applied to the UE group in which policies of at least some UEs need to be coordinated. In this case, frequent interactions between the AS and the communication network (caused by the policy coordination and linkage of UEs in the UE group) can be reduced.

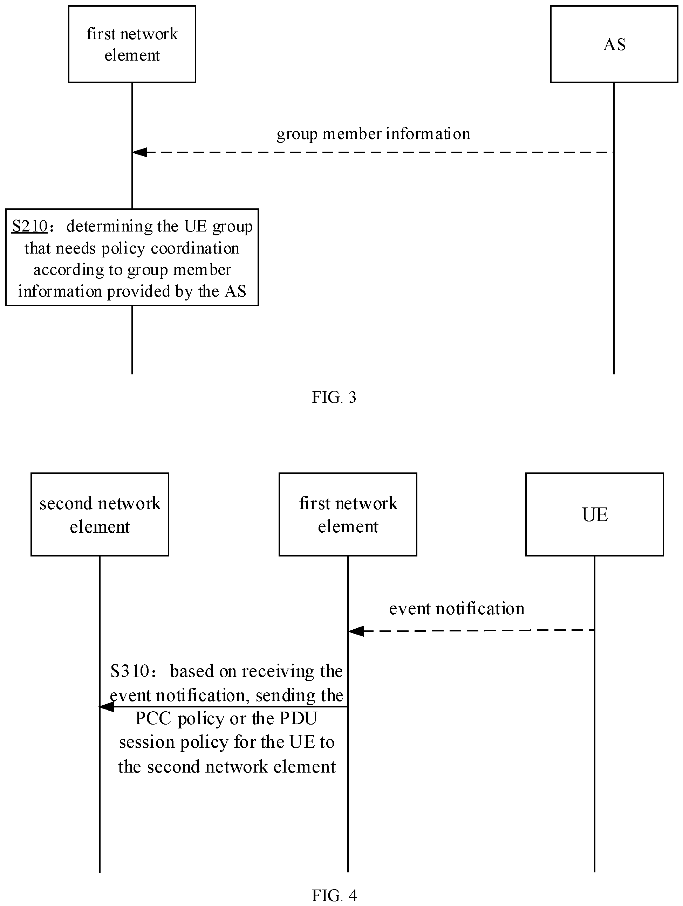

As shown in FIG. 3, there is provided the method performed by the first network element and including the following step.

In S210, the UE group that needs policy coordination is determined according to group member information provided by the AS.

The group member information includes one of a group member identifier, for example, one identifier marks one UE in the UE group; dependency information between group members, for example, the dependency information indicates whether policy coordination needs to be performed between any two members; and type information of the group members. For example, the dependency information between group members indicates that at least two members in the UE group have a dependency relationship, and such a UE group can be considered as a UE group with a policy coordination requirement. For example, a UE is an audio device and a UE is an image device. If these two devices process audio and image of a video stream, respectively, it can be determined according to the type information that there is a dependency relationship between the audio device and the image device in the UE group and the policy coordination is required.

The member information described above is only example, and specific implementations are not limited to the above examples.

In short, after the first network element obtains the group member information provided by the AS, it determines the UE group that needs the policy coordination, and the above method for processing the policy is only performed for the UE group that needs the policy coordination.

It should be noted that the above operation of determining the UEs requiring the policy coordination according to the group member information provided by the AS may be performed alone or in combination with the aforementioned S 110 and/or S210.

The group member information here may be received directly from the AS by the first network element such as the PCF, or may be received by the PCF from a user data repository (UDR). The group member information stored in the UDR is also received from the AS, so the first network element such as the PCF obtains the group member information provided by the AS.

In some embodiments, the method may include: receiving the policy information and the condition information of the UE group from the AS; or receiving the policy information and the condition information of the UE group from the UDR.

In one embodiment, the method includes: receiving the group member information of the UE group, and the policy information and the condition information of the UE group from the AS; or receiving the group member information, the policy information and the condition information from the UDR.

In some embodiments, the determination of the policy and the execution condition of the policy includes: determining a UE policy for each UE in the UE group and an execution condition of the UE policy; or determining a group policy for all UEs in the UE group and an execution condition of the group policy.

After the first network element receives the policy information and the condition information, one implementation includes: according to the policy information and the condition information, determining the policy and the execution condition for each UE in the UE group; another implementation includes: according to the policy information and the condition information, determining the group policy and the execution condition for the entire UE group.

As shown in FIG. 4, in an embodiment of the present invention, the method for processing the policy includes the following step.

In block S310, based on receiving an event notification, the PCC policy or the PDU session policy for the UE is sent to a second network element, the event notification indicates a notification of an occurrence of a trigger event corresponding to the execution condition of the UE policy, the PCC policy or the PDU session policy for the UE is used for the second network element to generate or update a QoS profile and a packet detective rule (PDR) for a single UE.

In some embodiments, the event notification is a notification sent by the UE and used for indicating the occurrence of the trigger event corresponding to the execution condition of the UE policy.

In the embodiments of the present invention, the first network element such as the PCF configures the policy and the execution condition of the policy for each UE according to the policy information and the condition information. In this way, when the state of the UE changes, the first network element can monitor the event notification of the occurrence of the trigger event; based on the event notification, the first network element will know the execution condition that the current state of the UE or the state of the network conforms to, and based on the execution condition that the current state of the UE and/or the state of the network conforms to, determine the policy to be effective or executed. In this way, the first network element can quickly switch to a policy suitable for the current state of the UE and/or the current state of the network based on the event notification without interacting with the AS.

If the policy and the execution condition for the UE are directly generated by the first network element such as the PCF according to the policy information and the condition information, the policy and the execution condition are issued by the first network element such as the PCF, and after the policy and the execution condition are switched, the policy is transferred between the network elements and executed, as shown in FIG. 4.

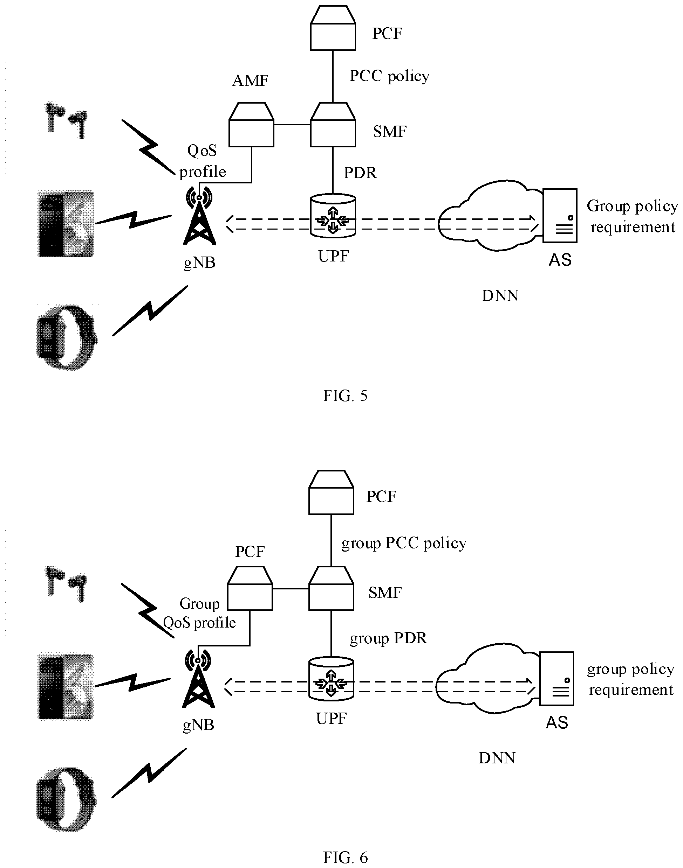

As shown in FIG. 5, the PCF as the first network element splits the policy information and the condition information into policies and policy execution conditions for each UE in the UE group according to a group policy requirement indicated by the policy information. The policy provided by the PCF includes, but is not limited to, the PCC policy. Each PCC policy includes at least one PCC rule.

After the PCF determines the policy and the execution condition, it sends them to a second network element such as a session management function (SMF). The second network element will generate a PDR and/or QoS profile according to the received policy and execution condition for each UE, and send the PDR to a user plane function (UPF) and/or send the QoS profile to a base station, for example, a next generation base station (gNB).

In some embodiments, the method further includes: sending the group policy and the execution condition of the group policy to the second network element, in which the group policy and the execution condition of the group policy are used for the second network element to generate or update a group QoS profile and a group PDR for the UE group.

In an example, the first network element such as the PCF generates the group policy and the execution condition of the group policy according to the policy information and the condition information. The group policy is a policy for the entire UE group. The execution condition is an execution condition of the entire group policy. In this way, the first network element such as the PCF directly sends the group policy and the execution condition of the group policy to the second network element such as the SMF.

As shown in FIG. 6, the PCF as the first network element splits the policy information and the condition information into the group policy and the execution condition of the group policy for the UE group according to the group policy requirement indicated by the policy information. The group policy provided by the PCF includes, but is not limited to, a group PCC policy. Each group PCC policy includes at least one PCC rule.

After the PCF determines the group policy and the execution condition, it sends them to the second network element such as the SMF. The second network element will generate the group PDR and/or the group QoS profile according to the received policy and the execution condition for each UE, and send the group PDR to the UPF and/or send the group QoS profile to the base station (e.g. gNB).

The SMF sends various types of QoS profiles to the base station via an access and mobility management function (AMF).

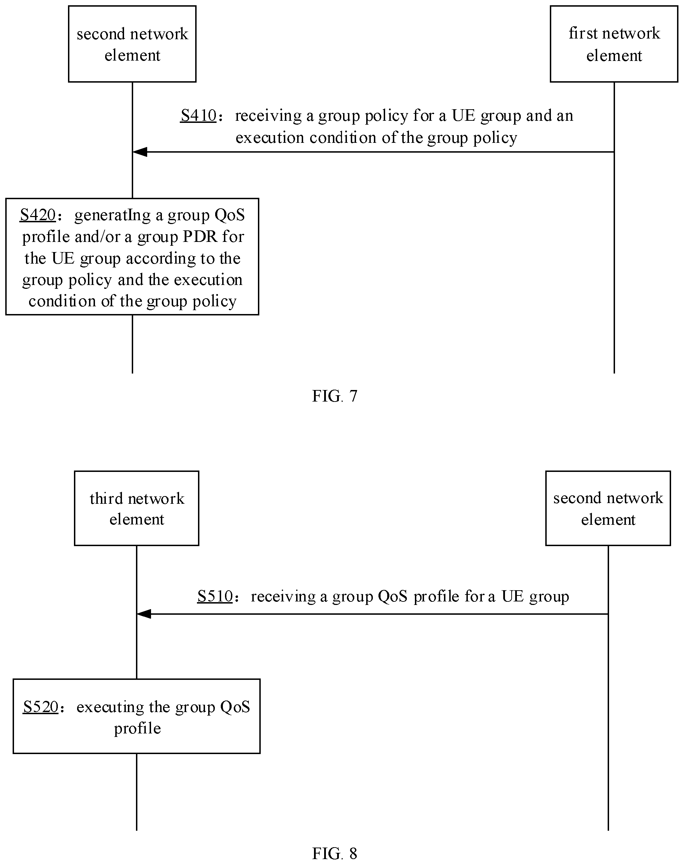

As shown in FIG. 7, in an embodiment of the present invention, there is provided a method for processing a policy, performed by a second network element, including the following steps.

In block S410, a group policy for a UE group and an execution condition of the group policy is received.

In block S420, a group QoS profile and/or a group PDR for the UE group are generated according to the group policy and the execution condition of the group policy. The group QoS profile and/or group PDR are used to allow the group policy to be executed in response to determining that the execution condition of the group policy is satisfied.

An object for performing the method for processing the policy in the embodiments of the present invention may be a network element connected to the first network element. In an example, the first network element and the second network element are network elements of the core network. For example, the first network element may be a PCF, and the second network element may be an SMF.

If the group policy and the execution condition of the group policy are sent by the first network element, after the second network element such as the SMF receives the group policy and the execution condition of the group policy, the second network element may generate the group QoS profile and the group PDR for the UE group according to the group policy and the execution condition of the group policy.

The group QoS profile here is a QoS profile for the UE group, which is different from a QoS profile for a single UE.

In an example, regarding the policy for the UE group and the policy for a single UE, an identifier corresponding to the group policy is a group identifier of the UE group, and an identifier corresponding to the policy for a single UE is a UE identifier of a single UE. Similarly, the group QoS profile may carry the group identifier of the UE group, and the group identifier determines which UE group the current QoS profile corresponds to.

Similarly, the group PDR is a PDR for a UE group, which is different from a PDR for a single UE.

In some embodiments, after the SMF receives the group policy and the execution condition of the group policy, it will generate the group QoS profile and the group PDR for the UE group, and deliver the generated group QoS profile and group PDR to the corresponding network elements.

In an example, the method further includes: sending the group PDR to a user plane function (UPF), where the group PDR is used for the UPF to execute the group policy according to the execution condition of the group policy; and/or sending the group QoS profile to a base station via an access and mobility management function (AMF), where the group QoS profile is used for the base station to execute the group policy according to the execution condition of the group policy.

After the second network element such as the SMF generates the group PDR, it sends the group PDR to the UPF. If the second network element generates the group QoS profile, it sends the group QoS profile to the base station via the AMF.

After the UPF receives the PDR, it will execute the PDR. In this way, the UPF can execute the group policy for communication of the corresponding UE group according to the execution condition which the state of the UE and/or the state of the network conform to.

After the base station receives the group QoS profile, it will execute the group policy for communication of the corresponding UE group according to the group QoS profile and then based on the execution condition which the state of the UE and/or the state of the network conform to.

In the embodiments of the present invention, the state of the UE group may include: a state configuration of any UE in the UE group, or a state configuration of the UE, with the priority indicated by the priority information included in the execution condition, in the UE group.

In the embodiments of the present invention, after receiving the group PDR, the UPF will monitor whether the state change of at least one UE in the UE group leads to the occurrence of the trigger event. If yes, the group policy comes into effect and is executed according to the execution condition which the state of the current UE group conforms to. Similarly, after the base station receives the group QoS profile, it will monitor whether the state change of at least one UE in the UE group leads to the occurrence of the trigger event. If yes, the group policy comes into effect and is executed according to the execution condition which the state of the current UE group conforms to.

In the embodiment of the present invention, when the trigger event corresponding to the execution condition occurs, the group policy for execution will be changed. Since the trigger event corresponding to the execution condition occurs, it can be known that the group policy for execution needs to be changed, and thus interacting with the AS is not needed. A specific group policy to be executed may be determined according to the execution condition which the current state of the UE and/or the state of the network conform to.

The execution condition includes a QoS threshold; and the trigger event includes: a QoS of at least one UE in the UE group exceeding the QoS threshold; and/or a QoS of at least one UE in the UE group being less than the QoS threshold.

In some embodiments, the execution condition includes priority information; and the trigger event includes at least one of resource allocation for a UE with a priority indicated by the priority information being unsuccessful; QoS guarantee for a UE with a priority indicated by the priority information being unsuccessful; resource allocation for a UE with a priority indicated by the priority information being successful; or QoS guarantee for a UE with a priority indicated by the priority information being successful.

The content related to the triggering event may refer to the above-mentioned corresponding embodiments, and will not be described in detail here.

As shown in FIG. 8, in an embodiment of the present invention, there is provided a method for processing a policy, including the following steps.

In block S510, a group QoS profile for a UE group is received.

In block S520, the group QoS profile is executed.

An object for performing the method for processing the policy in the embodiment of the present invention may be a third network element, and the third network element includes, but is not limited to, the base station.

After receiving the group QoS profile, the base station will perform resource scheduling and allocation according to the group QoS profile.

It should be noted that in the embodiment of the present invention, since the group QoS profile is generated according to the group policy and the execution file of the group policy, when performing resource scheduling and allocation according to the group QoS profile, the group policy corresponding to the currently satisfied execution condition is executed.

In this way, the interactions between the AS and the network can be reduced as much as possible, and the group policy such as optimal resource scheduling and allocation can be executed according to the state of the UE and/or the state of the network.

In some embodiments, executing the group QoS profile includes: monitoring a trigger event according to the group QoS profile; and executing the group QoS profile associated with the group policy corresponding to the execution condition that is satisfied after the trigger event occurs.

For example, the execution condition includes a QoS threshold; and the trigger event includes: a QoS of at least one UE in the UE group exceeding the QoS threshold; and/or a QoS of at least one UE in the UE group being less than the QoS threshold.

In some embodiments, the execution condition includes priority information; and the trigger event includes at least one of: resource allocation for a UE with a priority indicated by the priority information being unsuccessful; QoS guarantee for a UE with a priority indicated by the priority information being unsuccessful; resource allocation for a UE with a priority indicated by the priority information being successful; or QoS guarantee for a UE with a priority indicated by the priority information being successful.

The information included in the execution conditions and the trigger events corresponding to the execution conditions described above are only examples, and specific implementations are not limited to the above examples.

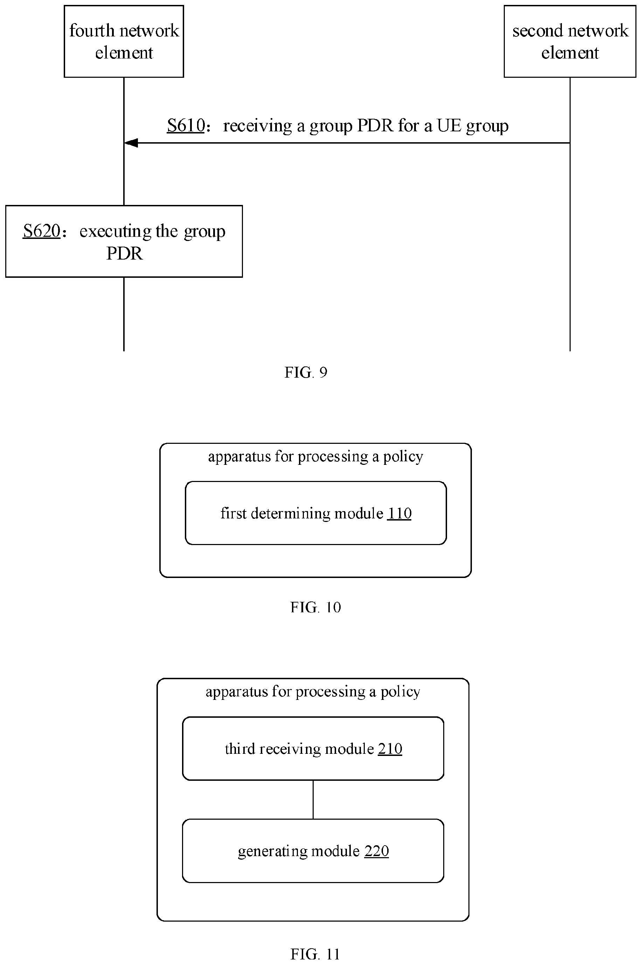

As shown in FIG. 9, in an embodiment of the present invention, there is provided a method for processing a policy, including the following steps.

In block S610, a group PDR for a UE group is received.

In block S620, the group PDR is executed.

An object for performing the method for processing the policy in the embodiment of the present invention may be a fourth network element, and the fourth network element includes, but is not limited to, the UPF.

The UPF receives the group PDR, and when receiving the group PDR, it determines the group policy and the execution condition of the group policy. When the trigger event corresponding to the execution condition is detected, the corresponding group policy is executed.

In some embodiments, executing the group PDR includes: monitoring a trigger event according to the group PDR; and executing the group PDR associated with the group policy corresponding to the execution condition that is satisfied after the trigger event occurs.

The group policy and the execution condition of the group policy are converted or refined in the PDR, the occurrence of the trigger event may be monitored according to the group PDR, and according to the execution condition that is satisfied after the trigger event occurs, the group PDR associated with the group policy corresponding to the currently satisfied execution condition will be executed.

In some embodiments, the execution condition includes a QoS threshold; and the trigger event includes: a QoS of at least one UE in the UE group exceeding the QoS threshold; and/or a QoS of at least one UE in the UE group being less than the QoS threshold.

In some embodiments, the execution condition includes priority information; and the trigger event includes at least one of resource allocation for a UE with a priority indicated by the priority information being unsuccessful; QoS guarantee for a UE with a priority indicated by the priority information being unsuccessful; resource allocation for a UE with a priority indicated by the priority information being successful; or QoS guarantee for a UE with a priority indicated by the priority information being successful.

The policy information and the condition information for the UE group are defined, and when the execution condition defined by the condition information is satisfied, the group policy corresponding to the execution condition can be executed. Therefore, the interaction between the AS and the communication network is reduced, and the policy switching for one or more UEs in the UE group may be performed in time.

A group policy is defined for the group of UEs collaboratively conducting an operation (service). The group policy and the execution condition of the group policy are configured for the UE group, or the policy and the execution condition of the policy are configured for each UE in the UE group.

The policy involved in the embodiments of the present invention includes, but is not limited to, the PCC policy and the PDU session policy.

The execution condition may include at least one trigger event of at least one UE. For example, the trigger event may include: events related to the QoS threshold, such as the QoS of the UE in the UE group being greater than the QoS threshold or less than the QoS threshold, the QoS of multiple UEs in the UE group changing, or the QoS of the UE with the mandatory priority or high priority being decreased below the QoS threshold; events related to the resource allocation result, such as resource allocation for the UE with the mandatory priority or high priority being unsuccessful or resource allocation for the UE with the mandatory priority or high priority being successful.

The AS provides group policy requirements to the network, and the policy requirements may include: the policy information and the execution condition of the policy.

The PCF retrieves the group policy requirements, either from the AS directly or from the UDR. Two execution options for the PCF are provided as follows.

In Option A, the PCF subscribes the event notification of the UE(s) based on the execution condition included in the group policy requirements; the PCF determines the policy of each UE according to the group policy requirements when the subscribed event notification is received; the PCF provides the policy for each UE, for example, provides the PCC policy to the SMF, and the PCC policy is used by the SMF to generate corresponding QoS profile and PDR; the QoS profile and PDR are executed(i.e., enforced) per individual UE.

In Option B, the PCF generates the group policy according to the group policy requirements; the PCF sends the group policy to the SMF, and the group policy is used by the SMF to generate the group QoS profile and the group PDR.

The SMF provides the group QoS profile to the base station, and provides the group PDR to the UPF. The base station enforces the group QoS profile, for example, performs resource scheduling and allocation according to the group QoS profile. The group policy is provided for multiple UEs collaboratively conducting the scheduling service. The group policy may include: the policy information and the execution condition.

As shown in FIG. 10, in an embodiment of the present invention, there is provided an apparatus for processing a policy, including a first determining module 110 configured to determine a policy for a UE in a UE group and an execution condition of the policy.

The apparatus for processing the policy is applied to or included in a first network element. The first network element includes, but is not limited to, a PCF.

In some embodiments, the first determining module 110 is a program module that, after executed by a processor, determines the policy for the UE group and the execution condition of the policy.

In other embodiments, the first determining module 110 is a hardware and software combined module. The hardware and software combined module includes, but is not limited to, various programmable arrays, and the programmable array includes, but is not limited to, a field programmable array and/or a complex programmable array.

In still some embodiments, the first determining module 110 includes, but is not limited to, a hardware module. The hardware module includes, but is not limited to, an application specific integrated circuit.

In some embodiments, the policy includes: a policy control and charging (PCC) policy, and/or a packet data unit (PDU) session policy.

In some embodiments, a trigger event corresponding to the execution condition occurs, and the policy for execution is switched.

In some embodiments, the execution condition includes a quality of service (QoS) threshold; and the trigger event includes: a QoS of at least one UE in the UE group exceeding the QoS threshold; and/or a QoS of at least one UE in the UE group being less than the QoS threshold.

In some embodiments, the execution condition includes priority information; and the trigger event includes at least one of: resource allocation for a UE with a priority indicated by the priority information being unsuccessful; QoS guarantee for a UE with a priority indicated by the priority information being unsuccessful; resource allocation for a UE with a priority indicated by the priority information being successful; or QoS guarantee for a UE with a priority indicated by the priority information being successful.

In some embodiments, the first determining module 110 is configured to determine the policy and the execution condition of the policy according to policy information and condition information for the UE in the UE group provided by an AS.

In some embodiments, the UE group includes a UE group that needs policy coordination.

In some embodiments, the apparatus further includes: a second determining module configured to determine the UE group that needs the policy coordination according to group member information provided by an AS.

In some embodiments, the apparatus further includes: a first receiving module configured to receive the group member information, and the policy information and the condition information of the UE group from the AS; or receive the group member information, and the policy information and the condition information of the UE group from a user data repository (UDR).

In some embodiments, the first determination module 110 is configured to determine a UE policy for each UE in the UE group and an execution condition of the UE policy, or determine a group policy for all UEs in the UE group and an execution condition of the group policy.

In some embodiments, the apparatus further includes: a first sending module configured to send a PCC policy or a PDU session policy for the UE to a second network element based on receiving an event notification. The event notification is configured to indicate a notification of an occurrence of a trigger event corresponding to the execution condition of the UE policy, and the PCC policy or the PDU session policy for the UE is configured for the second network element to generate or update a QoS profile and a packet detective rule (PDR) for a single UE.

In some embodiments, the apparatus further includes: a second sending module configured to send the group policy and the execution condition of the group policy to a second network element. The group policy and the execution condition of the group policy are configured for the second network element to generate or update a group QoS profile and a group PDR for the UE group.

As shown in FIG. 11, in an embodiment of the present invention, there is provided an apparatus for processing a policy, including: a third receiving module 210 configured to receive a group policy for a UE group and an execution condition of the group policy; and a generating module 220 configured to generate a group QoS profile and/or a group PDR for the UE group according to the group policy and the execution condition of the group policy. The group QoS profile and/or the group PDR are configured to allow the group policy to be executed in response to determining that the execution condition of the group policy is satisfied.

The apparatus for processing the policy may be applied to or included in a second network element. The second network element includes, but is not limited to, an SMF.

In some embodiments, the third receiving module 210 and the generating module 220 are program modules that, after executed by a processor, implement the above steps.

In other embodiments, the third receiving module 210 and the generating module 220 are hardware and software combined modules. The hardware and software combined module includes, but is not limited to, various programmable arrays, and the programmable array includes, but is not limited to, a field programmable array and/or a complex programmable array.

In still some embodiments, the third receiving module 210 and the generating module 220 include, but are not limited to, a hardware module. The hardware module includes, but is not limited to, an application specific integrated circuit.

In some embodiments, the apparatus further includes: a third sending module configured to send the group PDR to a user plane function (UPF). The group PDR is configured for the UPF to execute the group policy according to the execution condition of the group policy; and/or send the group QoS profile to a base station via an access and mobility management function (AMF). The group QoS profile is configured for the base station to execute the group policy according to the execution condition of the group policy.

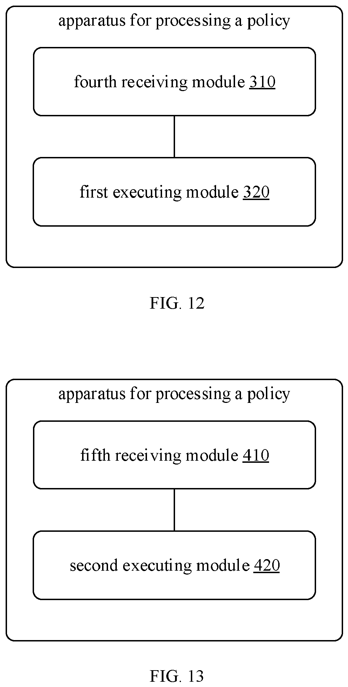

As shown in FIG. 12, in an embodiment of the present invention, there is provided an apparatus for processing a policy, including: a fourth receiving module 310 configured to receive a group QoS profile for a UE group, in which the group QoS profile is generated according to a group policy for the UE group and an execution condition of the group policy; and a first executing module 320 configured to execute the group QoS profile.

In some embodiments, the fourth receiving module 310 and the first executing module 320 are program modules that, after executed by a processor, implement the above steps.

In other embodiments, the fourth receiving module 310 and the first executing module 320 are hardware and software combined modules. The hardware and software combined module includes, but is not limited to, various programmable arrays, and the programmable array includes, but is not limited to, a field programmable array and/or a complex programmable array.

In still some embodiments, the fourth receiving module 310 and the first executing module 320 include, but are not limited to, a hardware module. The hardware module includes, but is not limited to, an application specific integrated circuit.

In some embodiments, the first executing module 320 is configured to monitor a trigger event according to the group QoS profile; and execute the group QoS profile associated with the group policy corresponding to the execution condition that is satisfied after the trigger event occurs.

In some embodiments, the execution condition includes a QoS threshold; and the trigger event includes: a QoS of at least one UE in the UE group exceeding the QoS threshold; and/or a QoS of at least one UE in the UE group being less than the QoS threshold.

In some embodiments, the execution condition includes priority information; and the trigger event includes at least one of: resource allocation for a UE with a priority indicated by the priority information being unsuccessful; QoS guarantee for a UE with a priority indicated by the priority information being unsuccessful; resource allocation for a UE with a priority indicated by the priority information being successful; or QoS guarantee for a UE with a priority indicated by the priority information being successful.

As shown in FIG. 13, in an embodiment of the present invention, there is provided an apparatus for processing a policy, including: a fifth receiving module 410 configured to receive a group PDR for a UE group, in which the group PDR is generated according to a group policy for the UE group and an execution condition of the group policy; and a second executing module 420 configured to execute the group PDR.

The apparatus for processing the policy may be applied to or included in a third network element. The third network element includes, but is not limited to, a UPF.

In some embodiments, the fifth receiving module 410 and the second executing module 420 are program modules that, after executed by a processor, implement the above steps.

In other embodiments, the fifth receiving module 410 and the second executing module 420 are hardware and software combined modules. The hardware and software combined module includes, but is not limited to, various programmable arrays, and the programmable array includes, but is not limited to, a field programmable array and/or a complex programmable array.

In still some embodiments, the fifth receiving module 410 and the second executing module 420 include, but are not limited to, a hardware module. The hardware module includes, but is not limited to, an application specific integrated circuit.

In some embodiments, executing the group PDR includes: monitoring a trigger event according to the group PDR; and executing the group PDR associated with the group policy corresponding to the execution condition that is satisfied after the trigger event occurs.

In some embodiments, the execution condition includes a QoS threshold; and the trigger event includes: a QoS of at least one UE in the UE group exceeding the QoS threshold; and/or a QoS of at least one UE in the UE group being less than the QoS threshold.

In some embodiments, the execution condition includes priority information; and the trigger event includes at least one of: resource allocation for a UE with a priority indicated by the priority information being unsuccessful; QoS guarantee for a UE with a priority indicated by the priority information being unsuccessful; resource allocation for a UE with a priority indicated by the priority information being successful; or QoS guarantee for a UE with a priority indicated by the priority information being successful.

In an embodiment of the present invention, there is provided a communication device including: a memory for storing processor-executable instructions; a processor connected to the memory. The processor is configured to implement the terminal control method and/or the information processing method provided by the foregoing technical solutions.

The processor may include various types of storage media, which are non-transitory computer-readable storage media, and can continue to memorize and store information thereon after the communication device is powered off.

Herein, the communication device includes any one of the aforementioned first to fourth network elements.

The processor may be connected to the memory through a bus or the like, and is configured to read the executable program stored on the memory, to implement, for example, at least one of the methods as shown in FIG. 2 to FIG. 9.

In an embodiment, there is also provided a non-transitory computer-readable storage medium including instructions, such as the memory 804 including instructions, which can be executed by the processor 820 of the UE 800 to implement the above method. For example, the non-transitory computer-readable storage medium may be a read-only memory (ROM), a random access memory (RAM), a CD-ROM, a magnetic tape, a floppy disk, an optical data storage device, and the like.

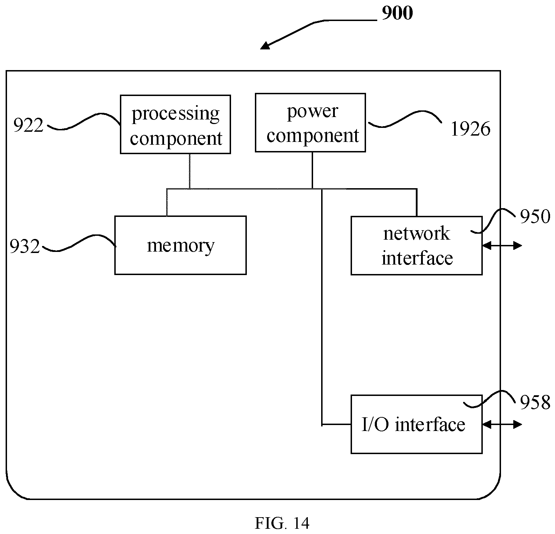

FIG. 14 shows a structure of a network element provided in an embodiment of the present invention. For example, the network element 900 includes, but is not limited to, a network element in an access network and/or a network element in a core network. The network element in the access network includes, but is not limited to, a base station. The network element in the core network includes, but is not limited to, PCF, SMF, UPF and/or AMF.

Referring to FIG. 14, the network element 900 includes a processing component 922 and a memory resource represented by a memory 932. The processing component 922 further includes at least one processor. The memory resource is configured to store instructions executable by the processing component 922, such as an application program. The application program stored in the memory 932 may include at least one module corresponding to a set of instructions. In addition, the processing component 922 is configured to execute the instructions to perform any method (e.g. the methods as shown in FIGS. 2 to 9) applied to the access device as described above.

The network element 900 further includes a power component 926 configured to operate a power management of the network element 900, a wired or wireless network interface 950 configured to connect the network element 900 to the network, and an input/output (I/O) interface 958. The network device 900 may operate an operating system stored in the memory 932, such as Windows Server TM, Mac OS XTM, UnixTM, LinuxTM, FreeBSDTM, or the like.

Other embodiments of the present invention will be apparent to those skilled in the art from consideration of the specification and practice of the present invention. The present invention is intended to cover any variations, uses, or adaptations of the present invention following the general principles thereof and including common knowledge or conventional technical means known in the art but not disclosed in the present invention. The specification and examples should be considered as explanatory only, with a true scope and spirit of the present invention being indicated by the following claims.

It will be appreciated that the present invention is not limited to the exact construction that has been described above and illustrated in the accompanying drawings, and that various modifications and changes can be made without departing from the scope thereof. The scope of the present invention is only limited by the appended claims.

## Claims

1. A method for processing a policy, performed by a first network element, comprising:
determining a policy for a user equipment, UE, in a UE group and an execution condition of the policy.

2. The method according to claim 1, wherein the policy comprises:
a policy control and charging, PCC, policy,
and/or
a packet data unit, PDU, session policy.

3. The method according to claim 1 or claim 2, further comprising:
switching the policy for execution, wherein a trigger event corresponding to the execution condition occurs.

4. The method according to claim 3, wherein the execution condition comprises a quality of service, QoS, threshold; and
wherein the trigger event comprises: a QoS of at least one UE in the UE group exceeding the QoS threshold; and/or a QoS of at least one UE in the UE group being less than the QoS threshold.

5. The method according to claim 3, wherein the execution condition comprises priority information; and
wherein the trigger event comprises at least one of:
resource allocation for a UE with a priority indicated by the priority information being unsuccessful;
QoS guarantee for a UE with a priority indicated by the priority information being unsuccessful;
resource allocation for a UE with a priority indicated by the priority information being successful; or
QoS guarantee for a UE with a priority indicated by the priority information being successful.

6. The method according to any one of claims 1 to 5, wherein determining the policy for the UE in the UE group and the execution condition of the policy comprises:
determining the policy and the execution condition of the policy according to policy information and condition information for the UE in the UE group provided by an application server, AS.

7. The method according to any one of claims 1 to 5, wherein the UE group comprises a UE group that needs policy coordination.

8. The method according to claim 7, further comprising:
determining the UE group that needs the policy coordination according to group member information provided by an AS.

9. The method according to claim 8, further comprising:
receiving the group member information, and the policy information and the condition information of the UE group from the AS; or
receiving the group member information, and the policy information and the condition information of the UE group from a user data repository, UDR.

10. The method according to any one of claims 1 to 9, wherein determining the policy and the execution condition of the policy comprises:
determining a UE policy for each UE in the UE group and an execution condition of the UE policy; or
determining a group policy for all UEs in the UE group and an execution condition of the group policy.

11. The method according to claim 10, further comprising:
sending a PCC policy or a PDU session policy for the UE to a second network element based on receiving an event notification,
wherein the event notification is configured to indicate a notification of an occurrence of a trigger event corresponding to the execution condition of the UE policy, and
wherein the PCC policy or the PDU session policy for the UE is configured for the second network element to generate or update a QoS profile and a packet detective rule, PDR, for a single UE.

12. The method according to claim 10, further comprising:
sending the group policy and the execution condition of the group policy to a second network element, wherein the group policy and the execution condition of the group policy are configured for the second network element to generate or update a group QoS profile and a group PDR for the UE group.

13. A method for processing a policy, performed by a second network element, comprising:
receiving a group policy for a UE group and an execution condition of the group policy; and
generating a group QoS profile and/or a group PDR for the UE group according to the group policy and the execution condition of the group policy;
wherein the group QoS profile and/or the group PDR are configured to allow the group policy to be executed in response to determining that the execution condition of the group policy is satisfied.

14. The method according to claim 13, further comprising:
sending the group PDR to a user plane function, UPF, wherein the group PDR is configured for the UPF to execute the group policy according to the execution condition of the group policy;
and/or
sending the group QoS profile to a base station via an access and mobility management function, AMF, wherein the group QoS profile is configured for the base station to execute the group policy according to the execution condition of the group policy.

15. A method for processing a policy, comprising:
receiving a group QoS profile for a UE group, wherein the group QoS profile is generated according to a group policy for the UE group and an execution condition of the group policy; and
executing the group QoS profile.

16. The method according to claim 15, wherein executing the group QoS profile comprises:
monitoring a trigger event according to the group QoS profile; and
executing the group QoS profile associated with the group policy corresponding to the execution condition that is satisfied after the trigger event occurs.

17. The method according to claim 16, wherein the execution condition comprises a QoS threshold; and
wherein the trigger event comprises: a QoS of at least one UE in the UE group exceeding the QoS threshold; and/or a QoS of at least one UE in the UE group being less than the QoS threshold.

18. The method according to claim 15, wherein the execution condition comprises priority information; and
wherein the trigger event comprises at least one of
resource allocation for a UE with a priority indicated by the priority information being unsuccessful;
QoS guarantee for a UE with a priority indicated by the priority information being unsuccessful;
resource allocation for a UE with a priority indicated by the priority information being successful; or
QoS guarantee for a UE with a priority indicated by the priority information being successful.

19. A method for processing a policy, comprising:
receiving a group PDR for a UE group, wherein the group PDR is generated according to a group policy for the UE group and an execution condition of the group policy; and
executing the group PDR.

20. The method according to claim 19, wherein executing the group PDR comprises:
monitoring a trigger event according to the group PDR;
executing the group PDR associated with the group policy corresponding to the execution condition that is satisfied after the trigger event occurs.

21. The method according to claim 2, wherein the execution condition comprises a QoS threshold;
wherein the trigger event comprises: a QoS of at least one UE in the UE group exceeding the QoS threshold; and/or a QoS of at least one UE in the UE group being less than the QoS threshold.

22. The method according to claim 22, wherein the execution condition comprises priority information; and
wherein the trigger event comprises at least one of
resource allocation for a UE with a priority indicated by the priority information being unsuccessful;
QoS guarantee for a UE with a priority indicated by the priority information being unsuccessful;
resource allocation for a UE with a priority indicated by the priority information being successful; or
QoS guarantee for a UE with a priority indicated by the priority information being successful.

23. An apparatus for processing a policy, comprising:
a first determining module configured to determine a policy for a UE in a UE group and an execution condition of the policy.

24. The apparatus according to claim 23, wherein the policy comprises:
a PCC policy,
and/or
a PDU session policy.

25. The apparatus according to claim 23 or 24, wherein a trigger event corresponding to the execution condition occurs, and the policy for execution is switched.

26. The apparatus according to claim 253, wherein the execution condition comprises a QoS threshold; and
wherein the trigger event comprises: a QoS of at least one UE in the UE group exceeding the QoS threshold; and/or a QoS of at least one UE in the UE group being less than the QoS threshold.

27. The apparatus according to claim 25, wherein the execution condition comprises priority information; and
wherein the trigger event comprises at least one of:
resource allocation for a UE with a priority indicated by the priority information being unsuccessful;
QoS guarantee for a UE with a priority indicated by the priority information being unsuccessful;
resource allocation for a UE with a priority indicated by the priority information being successful; or
QoS guarantee for a UE with a priority indicated by the priority information being successful.

28. The apparatus according to any one of claims 23 to 27, wherein the first determining module is configured to determine the policy and the execution condition of the policy according to policy information and condition information for the UE in the UE group provided by an AS.

29. The apparatus according to any one of claims 23 to 27, wherein the UE group comprises a UE group that needs policy coordination.

30. The apparatus according to claim 29, further comprising:
a second determining module configured to determine the UE group that needs the policy coordination according to group member information provided by an AS.

31. The apparatus according to claim 30, further comprising:
a first receiving module configured to receive the group member information, and the policy information and the condition information of the UE group from the AS; or receive the group member information, and the policy information and the condition information of the UE group from a UDR.

32. The apparatus according to any one of claims 23 to 31, wherein the first determination module is configured to determine a UE policy for each UE in the UE group and an execution condition of the UE policy, or determine a group policy for all UEs in the UE group and an execution condition of the group policy.

33. The apparatus according to claim 32, further comprising:
a first sending module configured to send a PCC policy or a PDU session policy for the UE to a second network element based on receiving an event notification, wherein the event notification is configured to indicate a notification of an occurrence of a trigger event corresponding to the execution condition of the UE policy, and
wherein the PCC policy or the PDU session policy for the UE is configured for the second network element to generate or update a QoS profile and a PDR for a single UE.

34. The apparatus according to claim 31, further comprising:
a second sending module configured to send the group policy and the execution condition of the group policy to a second network element, wherein the group policy and the execution condition of the group policy are configured for the second network element to generate or update a group QoS profile and a group PDR for the UE group.

35. An apparatus for processing a policy, comprising:
a third receiving module configured to receive a group policy for a UE group and an execution condition of the group policy;
a generating module configured to generate a group QoS profile and/or a group PDR for the UE group according to the group policy and the execution condition of the group policy;
wherein the group QoS profile and/or the group PDR are configured to allow the group policy to be executed in response to determining that the execution condition of the group policy is satisfied.

36. The apparatus according to claim 35, further comprising:
a third sending module configured to send the group PDR to a UPF, wherein the group PDR is configured for the UPF to execute the group policy according to the execution condition of the group policy; and/or send the group QoS profile to a base station via an AMF, wherein the group QoS profile is configured for the base station to execute the group policy according to the execution condition of the group policy.

37. An apparatus for processing a policy, comprising:
a fourth receiving module configured to receive a group QoS profile for a UE group, wherein the group QoS profile is generated according to a group policy for the UE group and an execution condition of the group policy; and
a first executing module configured to execute the group QoS profile.

38. The apparatus according to claim 37, wherein the first executing module is configured to monitor a trigger event according to the group QoS profile; and execute the group QoS profile associated with the group policy corresponding to the execution condition that is satisfied after the trigger event occurs.

39. The apparatus according to claim 38, wherein the execution condition comprises a QoS threshold; and
wherein the trigger event comprises: a QoS of at least one UE in the UE group exceeding the QoS threshold; and/or a QoS of at least one UE in the UE group being less than the QoS threshold.

40. The method according to claim 15, wherein the execution condition comprises priority information; and
wherein the trigger event comprises at least one of
resource allocation for a UE with a priority indicated by the priority information being unsuccessful;
QoS guarantee for a UE with a priority indicated by the priority information being unsuccessful;
resource allocation for a UE with a priority indicated by the priority information being successful; or
QoS guarantee for a UE with a priority indicated by the priority information being successful.

41. An apparatus for processing a policy, comprising:
a fifth receiving module configured to receive a group PDR for a UE group, wherein the group PDR is generated according to a group policy for the UE group and an execution condition of the group policy; and
a second executing module configured to execute the group PDR.

42. The apparatus according to claim 41, wherein executing the group PDR comprises:
monitoring a trigger event according to the group PDR; and
executing the group PDR associated with the group policy corresponding to the execution condition that is satisfied after the trigger event occurs.

43. The apparatus according to claim 42, wherein the execution condition comprises a QoS threshold;
wherein the trigger event comprises: a QoS of at least one UE in the UE group exceeding the QoS threshold; and/or a QoS of at least one UE in the UE group being less than the QoS threshold.

44. The apparatus according to claim 42, wherein the execution condition comprises priority information; and
wherein the trigger event comprises at least one of
resource allocation for a UE with a priority indicated by the priority information being unsuccessful;
QoS guarantee for a UE with a priority indicated by the priority information being unsuccessful;
resource allocation for a UE with a priority indicated by the priority information being successful; or
QoS guarantee for a UE with a priority indicated by the priority information being successful.

45. A communication device, comprising: a processor, a transceiver, a memory and an executable program stored in the memory and executable by the processor, wherein the processor is configured to execute the executable program to perform the method according to any one of claims 1 to 12, 13 to 14, 15 to 18, or 19 to 22.

46. A computer storage medium for storing an executable program that, after executed by a processor, implements the method according to any one of claims 1 to 12, 13 to 14, 15 to 18, or 19 to 22.
